# EUROPÄISCHE PATENTSCHRIFT

(11) **EP 1 708 901 B1**
(45) Veröffentlichungstag und Bekanntmachung des Hinweises auf die Patenterteilung: **21.07.2010**
(21) Anmeldenummer: 05715190.4
(22) Anmeldetag: 14.01.2005
(51) Int. Cl.: B60H 1/00, B60H 1/34

(54) **Verfahren zum Betreiben einer Heizungs- Belüftungs- oder Klimaanlage**
Method for operating a heating, ventilating or air-conditioning system
Procédé d'operation pour un système de chauffage, de ventilation ou de climatisation

(30) Priorität: 15.01.2004 DE 102004002364; 01.06.2004 DE 102004026912
(43) Veröffentlichungstag der Anmeldung: 11.10.2006
(73) Patentinhaber: Behr GmbH & Co. KG, 70469 Stuttgart (DE)
(72) Erfinder: BARUSCHKE, Wilhelm, 73117 Wangen (DE); HEINLE, Dieter, 73655 Plüderhausen (DE); KLINGLER, Dietrich, 73540 Heubach (DE); LOCHMAHR, Karl, 71665 Vaihingen/Enz (DE); PITZ, Eric, 70199 Stuttgart (DE); VOIGT, Klaus, 74321 Bietigheim-Bissingen (DE)
(86) Internationale Anmeldenummer: PCT/EP2005/000352
(87) Internationale Veröffentlichungsnummer: WO 2005/068233

(56) Entgegenhaltungen:
- EP-A- 1 332 899
- US-A- 4 949 624
- US-A- 6 012 297

## Beschreibung

Die Erfindung betrifft ein Verfahren zum Betreiben einer Heizungs-, Belüftungs- oder Klimaanlage.

Obige Anlagen versorgen insbesondere den Innenraum eines Fahrzeuges mit Luft. Dabei wird je nach Betriebszustand die Luft erwärmt oder abgekühlt, bevor sie in den Innenraum gelangt, um die Temperatur in einem bestimmten Bereich auf einen vorgebbaren Wert zu senken oder zu erhöhen. Auch kann mittels der Anlage die Luft entfeuchtet und mittels eines Filters gereinigt werden.

Die US 4 949 624 zeigt eine Anlage wie im Oberbegriff der Ansprüche 1 und 2 erwähnt.

In speziellen Betriebszuständen ist die Temperatur des Innenraums, insbesondere der Innenraumluft, deutlich verschieden von der gewünschten oder voreinstellbaren Temperatur. So ist es zum Beispiel im Sommer häufig der Fall, dass die Innenraumtemperatur wesentlich von der Solltemperatur abweicht, da sich das Fahrzeug aufgrund von Sonneneinstrahlung stark erhitzt hat.

In solchen Betriebszuständen werden große Luftmengen oder Luftmassen kalter Luft benötigt, um den Fahrzeuginnenraum schnell auf eine niedrigere Temperatur abzukühlen.

Ebenso kann es beispielsweise im Winter bei längeren Stillstandzeiten eines Fahrzeugs zu einem starken Absinken der Innenraumtemperaturen kommen. Die Differenz zur Solltemperatur soll nach Inbetriebnahme des Fahrzeugs in möglichst kurzer Zeit abgebaut werden, was wiederum zur Folge hat, dass große Luftmengen oder Luftmassen benötigt Werden.

In anderen Betriebszuständen ist es hingegen nicht notwendig, große Luftmengen in den Innenraum zu leiten, da dies bei den Insassen dort zu unangenehmen Zugerscheinungen führen würde. Dennoch ist eine gewisse Zufuhr von temperierter Luft notwendig.

Einen wesentlichen Beitrag zum Komfort- beziehungsweise Behaglichkeitsempfinden eines Fahrzeuginsassens kann für diese Betriebszustände nicht nur die Menge, sondern auch die Strömungscharakteristik der in den Fahrzeuginnenraum einzuleitenden Luft leisten.

Aufgabe der Erfindung ist es daher, ein entsprechendes Verfahren zur Steuerung oder Regelung oder Einstellung einer Klimaanlage zu schaffen, die bei ersten Betriebszuständen einen hohen Luftdurchsatz und/oder einen gerichteten Luftstrahl gewährleistet und in zweiten Betriebszuständen bei gegebenem Luftdurchsatz als nicht unangenehm insbesondere hinsichtlich Zugerscheinungen empfunden werden würde.

Erfindungsgemäß wird dies durch Verfahren gemäß Anspruch 1 und 2 erreicht.

Dadurch wird erfindungsgemäß erreicht, dass in ersten Betriebszuständen eine erste Charakteristik einstellbar ist. In solchen Betriebszuständen kann beispielsweise eine erhöhte Luftmenge benötigt werden, so dass durch den Spotcharakter eine bessere Durchmischung der Luft bei hohen Luftmengen pro Zeiteinheit erreichbar ist. Dadurch wird erfindungsgemäß weiterhin erreicht, dass in zweiten Betriebszuständen eine zweite Charakteristik einstellbar ist. In solchen Betriebszuständen kann beispielsweise eine reduzierte Luftmenge benötigt werden, so dass durch den Streucharakter eine bessere Durchmischung der Luft bei reduzierten Luftmengen pro Zeiteinheit erzielbar ist.

Erfindungsgemäß ist die Ausströmcharakteristik durch einen einstellbaren Drall veränderbar. Dabei ist es zweckmäßig, wenn der Drall des mindestens einen Luftstromes zwischen einem maximalen Wert bei der Streucharakteristik und einem minimalen Wert bei der Spotcharakteristik einstellbar ist und wenn der Drall in Spotcharakteristik völlig beseitigt ist.

Erfindungsgemäß ist die Ausströmcharakteristik zumindest eines Ausströmers in Abhängigkeit zumindest eines Parameters und/oder zumindest eines Betriebszustandes einstellbar oder steuerbar oder regelbar. Dies erfolgt so, dass bei Änderung des zumindest eines Parameters oder des Betriebszustands sich auch die Charakteristik des Ausströmers gesteuert oder geregelt verändert. Dabei ist die Ausströmcharakteristik in Abhängigkeit zumindest eines Parameters in Abweichung eines Sollwertes oder in Differenz von einem Sollwert steuerbar, regelbar oder einstellbar. Dies führt bei einem bevorzugten Ausführungsbeispiel dazu, dass die Charakteristik des Ausströmers bei Änderung von einem Sollwert sich ändert. Beispielsweise kann sich in Annäherung des Istwerts auf den Sollwert sich die Charakteristik des Ausströmers gesteuert oder geregelt von Spotcharakteristik auf Streucharakteristik ändern.

Bei einem weiteren bevorzugten Ausführungsbeispiel kann die Ausströmcharakteristik in Abhängigkeit eines Parameterfeldes oder Kennfeldes mehrerer Parameter steuerbar, regelbar oder einstellbar sein.

Bevorzugt ist, wenn ein Parameter eine Größe von der Innenraumtemperatur, der Sonneneinstrahlung, der Außentemperatur, der Fahrzeuggeschwindigkeit oder ein Zeitparameter ist.

Es ist vorteilhaft, wenn die Ausströmcharakteristik eines Ausströmers bei einer ersten Abweichung des Istwerts von einem Sollwert auf Spotcharakter einstellbar ist. Auch ist es zweckmäßig, wenn die Ausströmcharakteristik bei einer zweiten Abweichung des Istwerts von einem Sollwert auf Streucharakter einstellbar ist. Besonders zweckmäßig ist es, wenn die Ausströmcharakteristik bei Istwerten zwischen dem ersten und zweiten Sollwert eine Zwischenstellung (Zwischeneinstellung) zwischen Spotcharakter und Streucharakter einstellbar ist. Dies bedeutet, dass in einer Zwischenstellung oder Zwischeneinstellung eine Charakteristik einstellbar ist, die einen teilweisen Spotcharakter und einen teilweisen Streucharakter aufweist.

Es ist zweckmäßig, wenn bei eingestelltem Spotcharakter die aus den jeweiligen Ausströmem ausströmbare Luftmenge maximiert ist. In einem solchen Fall wird die Klimaanlage auf im wesentlichen maximale Luftausströmung eingestellt, so dass die ausströmbare Luftmenge vorzugsweise maximal ist.

Erfindungsgemäß wird ein Verfahren zur Steuerung einer Heizungs-, Belüftungs- oder Klimaanlage zur Verfügung gestellt, wobei die Anlage beispielsweise mit zumindest einem Sensor zur Erfassung des zumindest einen Istwerts und einer Steueranlage/Steuereinheit zur Ermittlung und Vergleich des zumindest Istwerts mit zumindest einem Sollwert und zur Ansteuerung eines Stellglieds eines Ausströmers zur Ansteuerung oder Einstellung der Charakteristik zumindest eines Ausströmers ausgestattet ist. Der Sensor kann auch durch ein Steuerprogramm oder ein Computerprogramm oder anderweitig ersetzt/ergänzt werden, wenn der Istwert nicht durch Messung sondern durch Verwendung anderer Daten bestimmbar ist. Beispielsweise können ein vorhandener Sensor bzw. Daten eines Sensors verwendbar sein, die von einer anderen Steuereinheit zur Verfügung gestellt werden.

Erfindungsgemäß wird in einem Verfahren zur Steuerung einer erfindungsgemäßen Heizungs-, Belüftungs- oder Klimaanlage die Ausströmcharakteristik und/oder die Ausströmstärke des zumindest einen Luftausströmers in Abhängigkeit zumindest eines Parameters P gesteuert oder geregelt.

Erfindungsgemäß erfolgt die Steuerung oder Regelung der Ausströmcharakteristik und/oder der Ausströmstärke des zumindest einen Luftausströmers in Abhängigkeit der Abweichung eines Istwertes von einem Sollwert.

In einer weiteren erfindungsgemäßen Ausgestaltung des Verfahrens wird die Ausströmcharakteristik des zumindest einen Luftausströmers nach einem zeitlich vorbestimmten Ablauf verändert.

Erfindungsgemäß werden in einer weiteren Ausgestaltung des Verfahrens die Ausströmcharakteristik und/oder die Ausströmstärke des Ausströmers in Abhängigkeit des zumindest einen Parameters P ausgehend von einem Ausgangswert P0 bis zum Erreichen eines Parameterwertes P1 konstant auf einer ersten Ausströmcharakteristik und/oder ersten Ausströmstärke gehalten und nach Erreichen des Parameterwertes P1 kontinuierlich oder in diskreter Schrittfolge bis zu einer zweiten Ausströmcharakteristik und/oder Ausströmstärke bis zum Erreichen eines Parameterwertes P2 automatisch verändert.

Bevorzugt wird die Ausströmstärke des Ausströmers nach Erreichen des Parameterwertes P2 kontinuierlich oder in diskreter Schrittfolge bis zu einer dritten Ausströmstärke bis zum Erreichen des Parameterwertes P3 automatisch verändert, insbesondere bis zu einem vorbestimmten Wert reduziert, wobei die Ausströmcharakteristik konstant gehalten wird.

Der zumindest eine Parameter P ist vorteilhafterweise eine Innenluft, Außenluft- und/oder Luftaustrittstemperatur und/oder ein Zeitparameter. Die entsprechenden Temperaturwerte werden bevorzugt mit einem Sensor gemessen und einer Auswerte- und Steuer- oder Regeleinheit als Parameterwerte zur Verfügung gestellt.

Vorteilhafterweise entspricht die erste Ausströmcharakteristik einer im Wesentlichen gerichteten Ausströmung oder Spotströmung und bevorzugt entspricht die zweite Ausströmcharakteristik einer Streucharakteristik beziehungsweise einer im Wesentlichen diffusen Ausströmung.

Erfindungsgemäß erfolgt die Festlegung eines Zeitpunkts T0 für den Beginn des Ablaufs des Verfahrens durch das Einschalten der Heizungs-, Belüftungs- oder Klimaanlage oder durch die Inbetriebnahme des Kraftfahrzeugs.

Bevorzugt werden die Parameterwerte P1, P2 und/oder P3 in Abhängigkeit eines Kennfeldes festgelegt und einer Regel- oder Steuereinheit für den Ablauf des erfindungsgemäßen Verfahrens zur Verfügung gestellt oder eingespeist.

Nachfolgend wird die Erfindung anhand der Zeichnung näher erläutert. Es zeigen:
- Fig. 1: eine Darstellung von möglichen Ausströmcharakteristika eines Luftausströmers
- Fig. 2: eine Darstellung von weiteren möglichen Ausströmcharakteristika eines Luftausströmers.
- Fig. 3: schematische Darstellung einer Luftführung mit Luf- tausströmer für ein Kraftfahrzeug;
- Fig. 4a: eine schematische Darstellung eines ersten beispielhaften Luftausströmers mit Ausströmcharakteristik;
- Fig. 4b: eine schematische Darstellung von einzelnen Komponen- ten des ersten Luftausströmers aus Fig. 4a;
- Fig. 5a bis 5d: Darstellungen einer Dosiereinrichtung und einer Luftleit- einrichtung des erster Luftausströmers bei unter- schiedlichen eingestellten Ausströmcharakteristika;
- Fig. 6a: eine schematische Darstellung eines zweiten Beispiels mit Ausströmcharakteristik;
- Fig. 6b: eine schematische Darstellung der Luftführung innerhalb der Luftleiteinrichtung des zweiten Beispiels.
- Fig. 6c: eine schematische Darstellung von einzelnen Komponen- ten des zweiten Beispiels.
- Fig. 7a: eine schematische Darstellung der Luftleiteinrichtung des zweiten Beispiels.
- Fig. 7b: eine schematische Darstellung der Dosiereinrichtung des zweiten Beispiels;
- Fig.8: eine schematische Darstellung eines weiteren Beispiels für eine Luftleiteinrichtung;
- Fig. 9: eine Darstellung eines Fahrzeuginnenraums mit Luftausströmern;
- Fig. 10: eine schematische Darstellung einer Klimaanlage;
- Fig. 11: eine schematische Darstellung eines Verlaufs einer Cha- rakteristik;
- Fig. 12: eine schematische Darstellung eines Verlaufs einer Cha- rakteristik gemäß einem weiteren Ausführungsbeispiel.

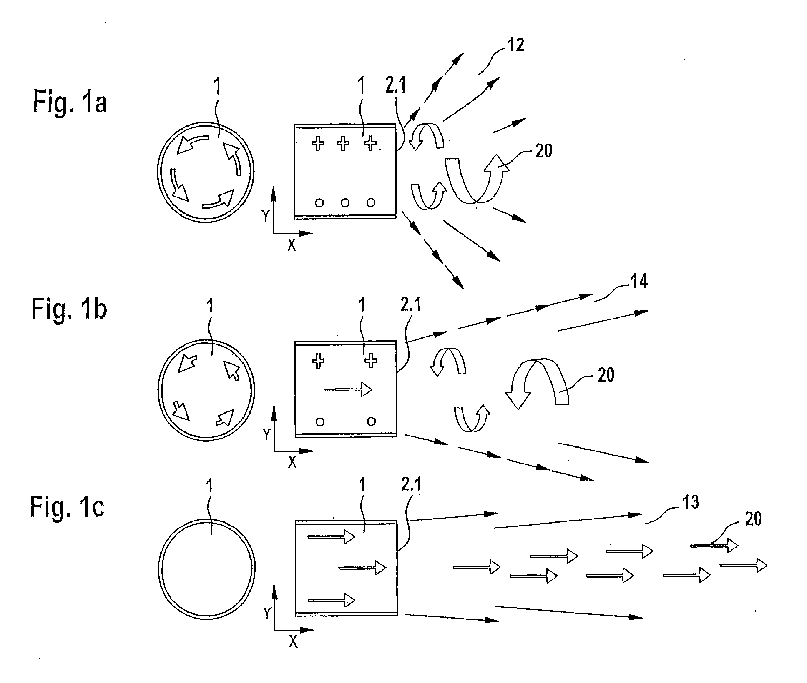

Fig. 1 zeigt Darstellungen von möglichen Ausströmcharakteristika eines ersten Beispiels, bei der ein einziger zugeführter Luftstrom mit einem einstellbaren Drall beaufschlagt wird, um die Ausströmcharakteristik eines Luftausströmers 1 zu verändern.

So zeigt Fig. 1a einen Luftausströmer 1 für ein Kraftfahrzeug, bei dem der axial austretende Luftstrom 20 mit einem starken Drall beaufschlagt ist. Deshalb bildet sich vor einer Austrittsöffnung 2.1 des Luftausströmer 1 ein Ausströmbereich 12 mit einer Streucharakteristik aus, d.h. der aus dem Luftausströmer 1 austretende Luftstrom 20 ist stark aufgefächert und es erfolgt nur eine schwache Verteilung in X-Richtung.

Fig. 1b zeigt einen Luftausströmer 1 für ein Kraftfahrzeug, bei dem der axial austretende Luftstrom 20 mit einem Drall beaufschlagt ist. Deshalb bildet sich vor der Austrittsöffnung 2.1 des Luftausströmer 1 ein Ausströmbereich 14 mit einer Mischcharakteristik 12 aus, d.h. der aus dem Luftausströmer austretende Luftstrom 20 ist weniger stark aufgefächert als bei der Streucharakteristik und es erfolgt eine mittlere Verteilung in X-Richtung.

Fig. 1c zeigt einen Luftausströmer 1 für ein Kraftfahrzeug, bei dem der axial austretende Luftstrom 20 nicht mit einem Drall beaufschlagt ist. Deshalb bildet sich vor der Austrittsöffnung 2.1 des Luftausströmer 1 ein Ausströmbereich 13 mit einer Spotcharakteristik aus, d.h. der aus dem Luftausströmer austretende Luftstrom 20 ist so gut wie gar nicht aufgefächert und es erfolgt eine starke Verteilung in X-Richtung.

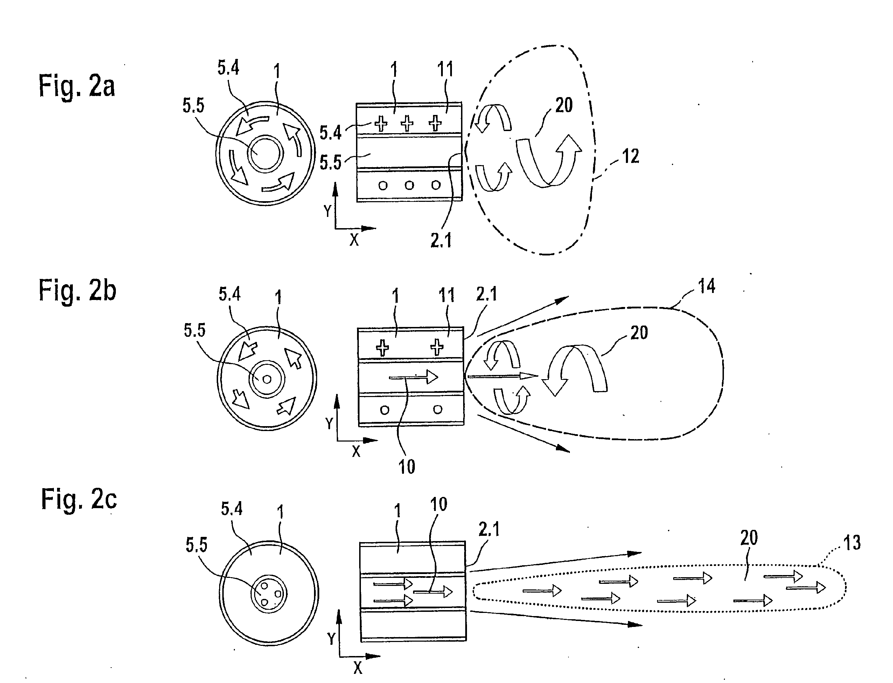

Fig. 2 zeigt Darstetellungen von möglichen Ausströmcharakteristika eines zweiten Beispiels, bei der ein einziger zugeführter Luftstrom in mindestens zwei Teilluftströme 9, 10 aufgeteilt wird, wobei ein erster Teilluftstrom 10, im dargestellten Beispiel ein sogenannter Kemluftstrom 10 ohne Drall zur Austrittsöffnung 2.1 geführt wird und ein zweiter Teilluftstrom 9, im dargestellten Beispiel als mit einem einstellbaren Drall beaufschlagter sogenannter Mantelluftstrom 11 zur Austrittsöffnung 2.1 geführt wird. Der Kernluftstrom 10 wird in einem Kernkanal 5.5 und der Mantelluftstrom 11 in einem Mantelkanal 5.4 des Luftausströmers 1 geführt. 10. Durch die Aufteilung des zugeführten Luftstroms 8 in mehrere Teilluftströme können die beschriebenen Ausströmcharakteristika besser ausgeprägt und gesteuert werden, wobei eine Aufteilung insbesondere in zwei Teilluftströme einfach zu realisieren ist.

So zeigt Fig. 2a den Luftausströmer 1, bei dem nur der mit einem Drall beaufschlagte Mantelluftstrom 11 zur Austrittsöffnung 2.1 geführt wird. Deshalb bildet sich vor der Austrittsöffnung 2. 1 des Luftausströmer 1 der Ausströmbereich 12 mit einer Streucharakteristik aus, d.h. der aus dem Luftausströmer 1 austretende Luftstrom 20 ist stark aufgefächert und es erfolgt nur eine schwache Verteilung in X-Richtung. Dieser Ausströmbereich wird auch als Streubereich oder als diffuser Bereich bezeichnet.

Fig. 2c zeigt den Luftausströmer 1 für ein Kraftfahrzeug, bei dem nur der Kernluftstrom 10 zur Austrittsöffnung 2.1 geführt wird. Deshalb bildet sich vor der Austrittsöffnung 2.1 des Luftausströmer 1 ein Ausströmbereich 13 mit einer Spotcharakteristik aus, d.h. der aus dem Luftausströmer 1 austretende Luftstrom 20 ist so gut wie gar nicht aufgefächert und es erfolgt eine starke Verteilung in X-Richtung. Der Ausströmbereich 13 wird auch als Spotbereich bezeichnet.

Fig. 2b zeigt den Luftausströmer 1 für ein Kraftfahrzeug, bei dem sowohl der Kemluftstrom 10 als auch der mit einem Drall beaufschlagte Mantelluftstrom zur Austrittsöffnung 2.1 geführt wird. Die beiden Luftströme 10, 11 beeinflussen sich gegenseitig und es ergibt sich ein dritter Bereich 14 in dem sich die beiden Luftströme 10, 11 verteilen, wobei die Form des dritten Bereiches 14 vom Anteil der beiden Luftströme an einer augenblicklichen Luftverteilung abhängig ist. In anderen Worten ausgedrückt, der Kernluftstrom 10 wird abhängig von der Massenstromaufteilung zwischen dem Kemluftstrom 10 und dem Mantelluftstrom 11 durch den vom Mantelluftstrom 11 aufgeprägten Drall destabilisiert und entsprechend aufgefächert, bzw. der mit dem Drall beaufschlagte Mantelluftstrom 11 wird abhängig von der Massenstromaufteilung durch den Kernluftstrom 10 weiter in X-Richtung transportiert, wodurch die Auffächerung durch den Drall erst in größerer Entfernung von der Ausströmöffnung 2.1 wirksam wird. Somit lässt sich in Abhängigkeit von der Massenstromaufteilung jede mögliche Luftverteilung bzw. Ausströmcharakteristik zwischen den beiden Extremwerten nur Mantelluftstrom 11 und Streucharakteristik oder nur Kernluftstrom 10 und Spotcharakteristik realisieren.

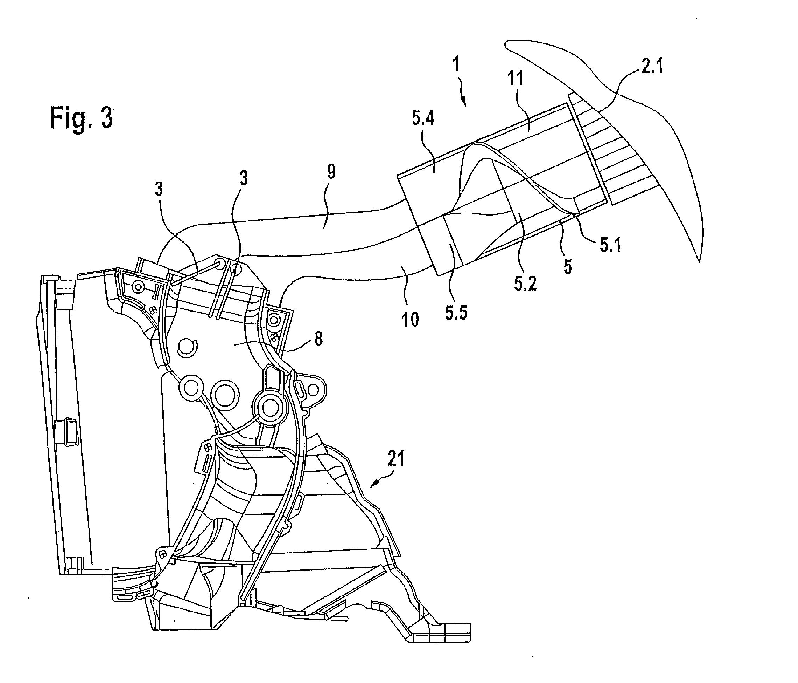

Fig. 3 zeigt eine schematische Darstellung einer Luftführung mit einem Luftausströmer 1 in einem Kraftfahrzeug. Der Luftausströmer entspricht dabei dem oben beschriebenen zweiten Beispiel, d.h. ein erster Teilluftstrom 10 wird über den Kernkanal 5.5 zur Austrittsöffnung 2.1 geführt und ein zweiter Teilluftstrom 9 wird im Mantelkanal 5.4 durch entsprechende Luftleitelemente 5.1 mit einem Drall beaufschlagt und als mit einem Drall beaufschlagter Mantelluftstrom 11 zur Austrittsöffnung 2.1 geführt. Die Luftaufteilung des zugeführten Luftstroms 8 wird dabei durch eine in einem Klimagerät 21 angeordnete Dosiereinrichtung eingestellt, die im dargestellten Ausführungsbeispiel durch zwei Klappen mit zugehörigen Ansteuerungsmitteln realisiert ist.

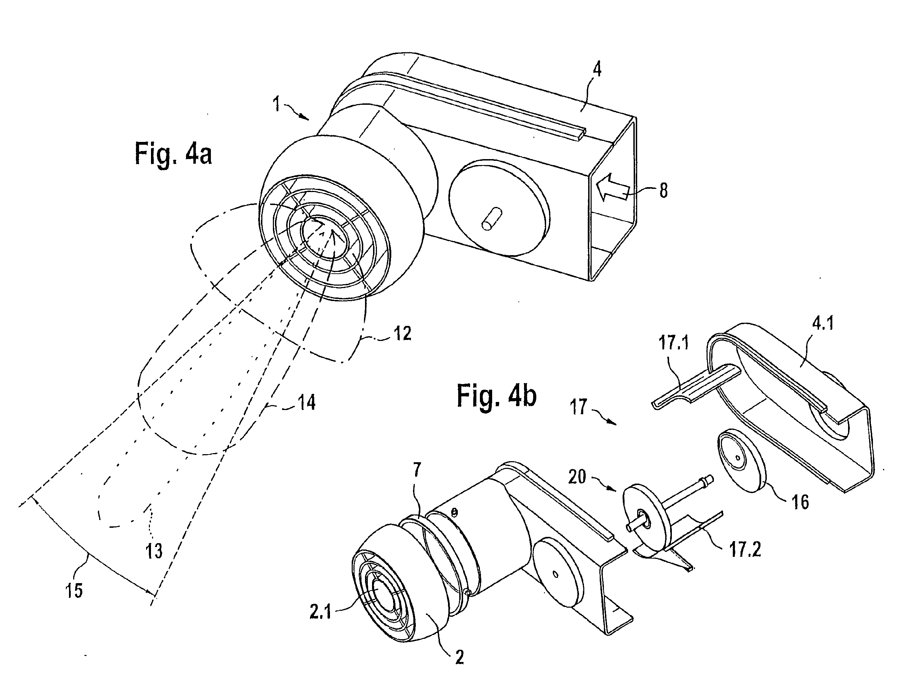

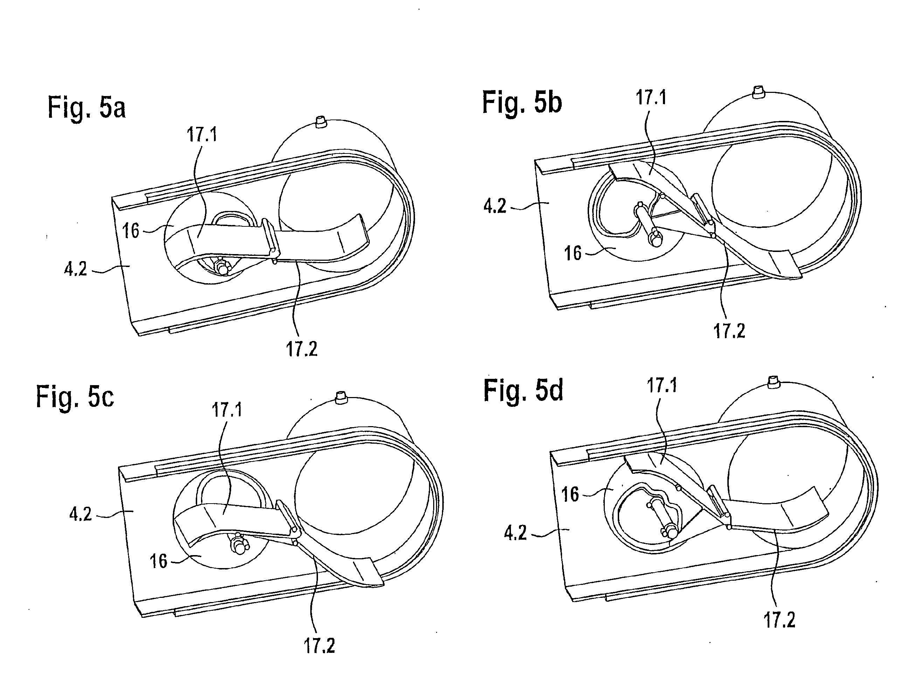

Fig. 4 zeigt eine mögliche Ausführungsform des ersten Beispiels. So zeigt Fig. 4a eine schematische Darstellung des ersten Beispiels der Erfindung mit verschiedenen Ausströmcharakteristika und Fig. 4b eine schematische Darstellung von einzelnen Komponenten des ersten Ausführungsbeispiels. Wie aus Fig. 4a und 4b ersichtlich ist, schließt sich der Luftausströmer 1 beim ersten Beispiel an einen Luftkanal 4 an, der einen Luftstrom 8 zuführt. Der Luftausströmer 1 umfasst eine schon im Luftkanal 4 angeordnete Dosier/Luftverteilvorrichtung 17. Die Dosier/Luftverteilvorrichtung 17 umfasst eine zweiteilige Luftleitschaufel 17.1, 17.2 und eine Kurvenscheibe 16 mit zugehörigem Antrieb 20, wobei die Luftleitschaufel eine obere 17.1 und eine untere 17.2 Schaufel umfasst. An die Dosier/Luftverteilvorrichtung 17 schließt sich ein Schwenkring 7 und eine verschwenkbare Blende 2 mit der Ausströmöffnung 2.1 zum Einstellen der Ausströmrichtung innerhalb eines Schwenkbereichs 15 an. Mit dem Luftausströmer 1 werden die bereits beschriebenen ersten, zweiten und dritten Bereiche 12, 13, 14 der Luftverteilung vor der Ausströmöffnung 2.1 und die damit verbundene Ausströmcharakteristika erreicht, wie nachfolgend anhand der Fig. 5a bis Fig. 5d erläutert wird.

Fig. 5 zeigt den Luftkanal 4 mit abgenommenen Luftkanaloberteil 4.1 und die darin angeordnete Dosier/Luftverteilvorrichtung 17 mit unterschiedlichen Stellungen der beiden Schaufeln 17.1, 17.2 zur Erzielung der unterschiedlichen Ausströmcharakteristika.

Fig. 5a zeigt die beiden Schaufeln 17.1, 17.2 in einer Mittelstellung zur Erzielung der Ausströmcharakteristik des dritten in Fig. 1b dargestellten Bereichs 14, bei dem der axial austretende Luftstrom mit einem Drall beaufschlagt ist, wobei die Spotcharakteristik durch Absenken der unteren Schaufel 17.2 in Richtung untere Luftkanalwand vergrößert wird, und wobei die Streucharakteristik durch Anheben der oberen Schaufel 17.1 in Richtung oberer Luftkanalwand vergrößert wird.

Fig. 5b zeigt die Stellung der beiden Schaufeln 17.1, 17.2 in einer Schließstellung des Luftausströmers 1 bei der kein Luftstrom an der Austrittsöffnung 2.1 austritt, d.h. die beiden Schaufeln 17.1, 17.2 sperren die gesamten Querschnittsfläche des Luftkanals 4, wobei die obere Schaufel 17.1 an einer oberen Wand und die untere Schaufel 17.2 an einer unteren Wand des Luftkanals 4 dichtend anliegt.

Fig. 5c zeigt eine Stellung der Schaufeln 17.1, 17.2 mit der die Spotausströmcharakteristik des in Fig. 1c dargestellten zweiten Bereichs 13 erzielt wird. Die obere Schaufel 17.1 befindet sich dabei in einer nahezu waagerechten Stellung, während die untere Schaufel 17.2 den unteren Bereich des Luftkanals 4 schließt, so dass der Luftstrom auf der Oberseite der Schaufeln 17.1, 17.2 nahezu ohne Drall zur Ausströmöffnung 2.1 geführt wird.

Fig. 5d zeigt eine Stellung der Schaufeln 17.1, 17.2 mit der die Streuausströmcharakteristik des in Fig. 1a dargestellten ersten Bereichs 12 erzielt wird. Die untere Schaufel 17.2 befindet sich dabei in einer nahezu waagerechten Stellung, während die obere Schaufel 17.1 den oberen Bereich des Luftkanals 4 dichtend schließt, so dass der Luftstrom entlang der Unterseite der Schaufeln 17.1, 17.2 in einen Randbereich des Luftkanals 4 geführt wird, wodurch dem Luftstrom ein Drall aufgeprägt wird, mit dem der Luftstrom dann zur Ausströmöffnung 2.1 geführt wird.

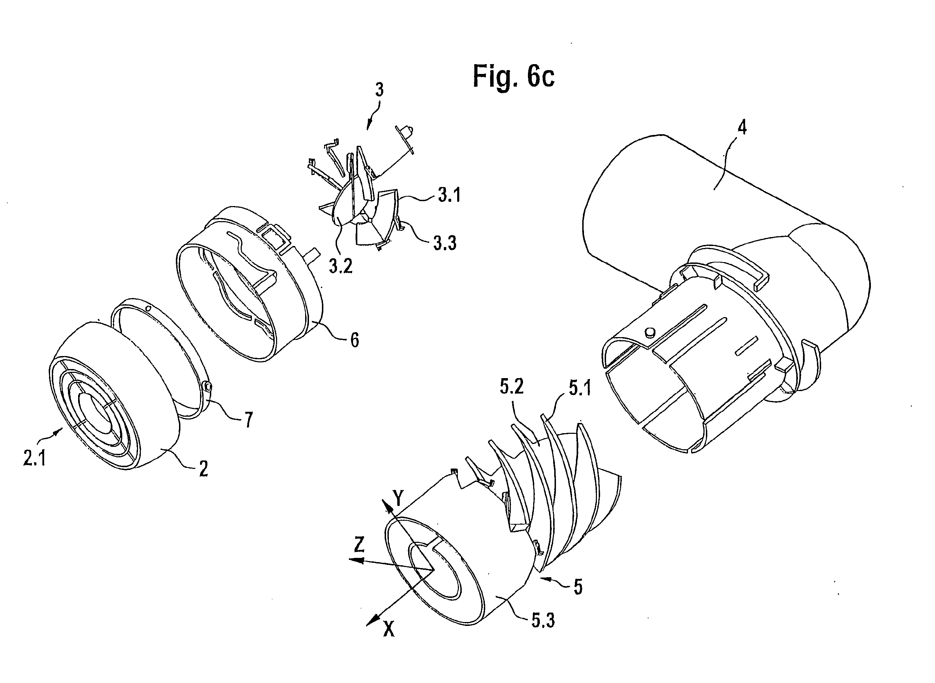

Wie aus Fig. 6c ersichtlich ist, umfasst das zweite Beispiel des Luftausströmers 1, eine Blende 2 mit Ausströmöffnung 2.1, eine Dosiereinrichtung 3, eine Luftleiteinrichtung 5, einen Betätigungsring 6 und einen Schwenkring 7, wobei der Luftausströmer 1 sich an einen Luftkanal 4 anschließt.

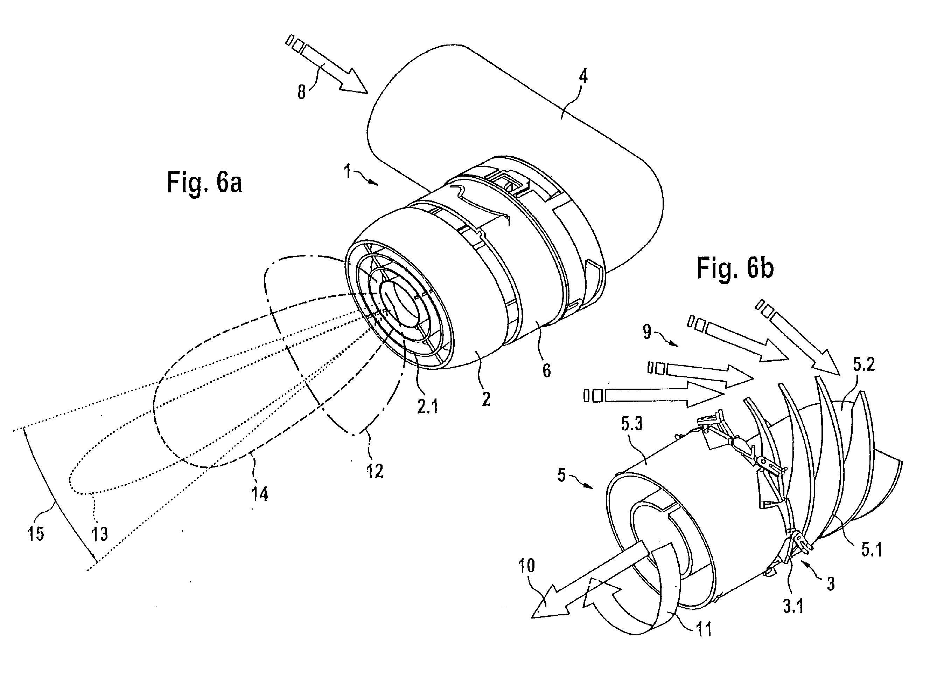

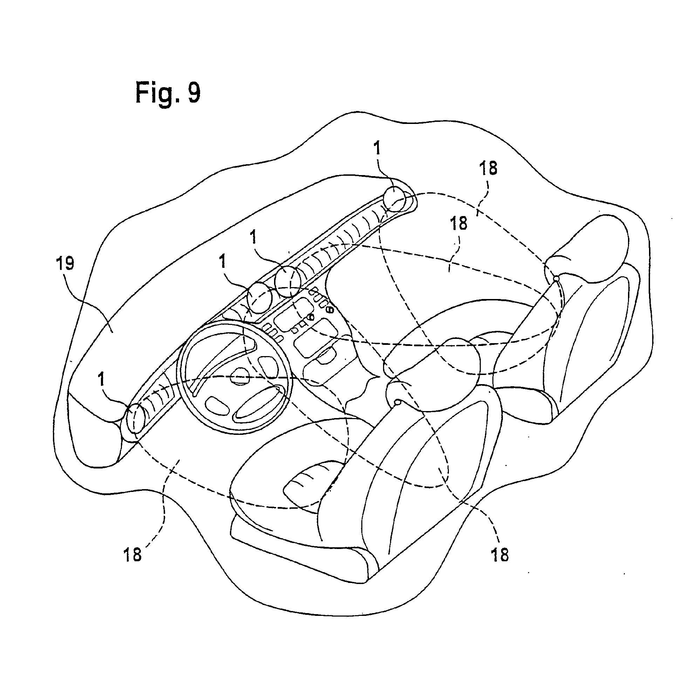

So zeigt Fig. 6a einen vollständig zusammengebauten Luftausströmer 1, bei dem die Luftleiteinrichtung 5 in den Luftkanal 4 eingeschoben ist, wobei die Dosiereinrichtung 3 im Bereich der Luftleiteinrichtung 5 angeordnet ist (siehe Fig. 6b), wobei der Betätigungsring 6 zur Einstellung der Dosiereinrichtung 4 über einen vorderen Bereich 5.3 der Luftleiteinrichtung 5 geschoben wird, bis der Betätigungsring 6 in die Dosiereinrichtung 3 eingreift. Die Luftleiteinrichtung 5 teilt einen dem Luftausströmer 1 über den Luftkanal zugeführten Luftstrom 8 durch Luftleitelemente 5.1, 5.2 in zwei Teilluftströme 9 und 10 auf, wie aus Fig. 6b ersichtlich ist, wobei die Dosiereinrichtung 3 Mittel 3.2 zum Dosieren des ersten Teilluftstroms 10 und Mittel 3.1 zum Dosieren des zweiten Teilluftstroms 9 umfasst, und wobei die Mittel zum Dosieren 3.1, 3.2 vorzugsweise einzelne Klappen bzw. Luftleitelemente umfassen, die vom Betätigungsring 6 über entsprechende an der Dosiereinrichtung 3 angeordnete Eingriffe 3.3 einstellbar sind. Dem zweiten Teilluftstrom 9 wird durch die Leitelemente 5.1 bzw. durch die Dosiereinrichtung 3 ein Drall aufgeprägt, so dass der zweite Teilluftstrom 9 als mit einem Drall beaufschlagter zweiter Teilluftstrom 11 die Luftleiteinrichtung verlässt. Das Luftleitelement 5.2 führt den ersten Teilluftstrom 10 ohne Drallaufprägung durch die Luftleiteinrichtung zu der Blende 2, die mit dem Schwenkring 7 eine Vorrichtung zur Einstellung eines Schwenkbereichs 15 des Luftausströmers 1 bildet, mit der die Richtung des Luftstroms im Bereich einer Austrittsöffnung 2.1 einstellbar ist. Die Austrittsöffnung 2.1 und somit auch die Vorrichtung 2, 7 zur Einstellung der Richtung des Luftstroms sind in einem Armaturenbrett 19 (siehe Fig. 9) eines Kraftfahrzeugs eingebaut und somit kann der Insasse direkt eine gewünschte Richtung des Luftstromes einstellen und auch die zu den einzelnen Luftausströmem 1 gehörenden Ausströmbereiche 18 variieren.

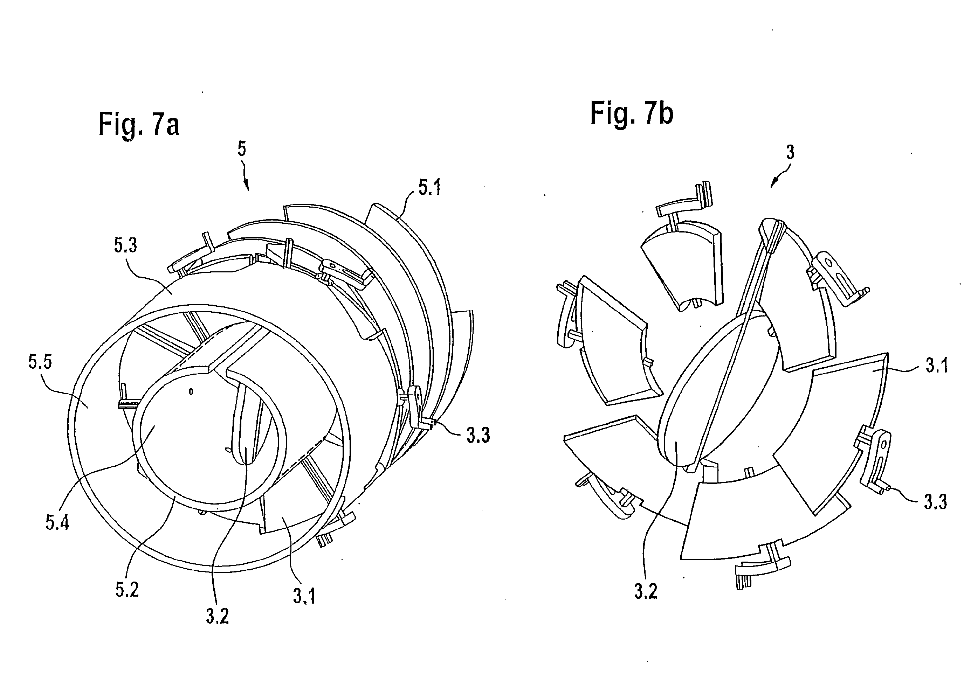

Fig. 7a und 7b zeigen die Luftleiteinrichtung 5 mit der Dosiereinrichtung 3 und die Dosiereinrichtung 3 im Detail. Wie aus Fig. 7b ersichtlich ist, umfasst die Dosiereinrichtung 3 erste Klappen 3.1 zur Dosierung des zweiten Luftstroms 9 bzw. des Mantelluftstroms 11 und eine zweite Klappe 3.2 zur Dosierung des ersten Luftstroms 10 bzw. des Kernstroms. Zudem sind Mittel 3.3 vorhanden, die in den in Fig. 6 dargestellten Betätigungsring 6 eingreifen, damit über den Betätigungsring 6 die Klappen 3.1, 3.2 zur Dosierung der Teilluftströme 9, 10 verstellt werden können. Mit der Dosiervorrichtung 3 und/oder der Luftleitvorrichung 5 lässt sich zur Erzeugung des Dralls die Luftführung und/oder die Luftmenge und/oder die Luftgeschwindigkeit und damit die Ausströmcharakteristik des zugeführten Luftstroms 8 verändern.

Wie aus Fig. 7a ersichtlich ist, teilt die Luftleitvorrichtung 5 den zugeführten Luftstrom 8 im dargestellten Beispiel in zwei Teilluftströme auf. Die Aufteilung erfolgt in radialer Richtung, so dass in einem mittleren Bereich 5.4 der Luftleitvorrichtung 5 der Kernluftstrom in einem Kernkanal 5.4 in axialer Richtung zur Ausströmöffnung 2.1 geführt wird und in einem äußeren Bereich 5.5 der mit einem Drall beaufschlagte Mantelluftstrom 11 in einem Mantelkanal 5.5 zur Ausströmöffnung 2.1 geführt wird. Der zweite Teilluftstrom 9 wird durch die Luftleitelemente 5.1 wendelförmig um den mittleren Kernkanal 5.4 geführt und erhält entsprechend der Ausrichtung der Luftleitelemente 5.1 einen Drall, im oder entgegen dem Uhrzeigersinn, wie in den Figuren durch entsprechende Pfeile im Bereich des Luftaustritts angedeutet ist. Im Gegensatz zum dargestellten Beispiel ist es aber auch vorstellbar den im mittleren Bereich 5.4 geführten Kernluftstrom 10 durch geeignete Luftleitelemente mit einem Drall zu beaufschlagen und zur Ausströmöffnung 2.1 zu führen und den im äußeren Bereich geführten Mantelluftstrom 11 im Wesentlichen ohne Drall zur Ausströmöffnung 2.1 zu führen.

Wie aus den Fig. 6b und 7a ersichtlich ist, können die Teilluftströme nochmals in Unterluftströme aufgeteilt sein, was im dargestellten ersten Beispiel für den zweiten Teilluftstrom 9 zutrifft. Dort bilden die einzelnen Luftleitelemente 5.1 mehrere Untermantelkanäle, deren Strömungsquerschnitte durch entsprechende Klappen 3.1 in der Dosiereinrichtung 3 einzeln oder gemeinsam verändert werden können. Die einzelnen Unterkanäle werden im vorderen Bereich der Luftleitvorrichtung 5.3 wieder zu einem Mantelkanal 5.5 vereinigt, in dem der mit einem Drall beaufschlagte Mantelluftstrom 11 zur Ausströmöffnung 2.1 geführt wird.

Die Einstellung der Dosiereinrichtung 3 erfolgt direkt durch den Insassen über ein am Armaturenbrett 19 angeordnetes Betätigungsorgan oder erfindungsgemäß automatisch von einer Steuer/Regeleinheit gemäß einem vom Benutzer gewählten Belüftungs- und/oder Klimatisierungsprogramm.

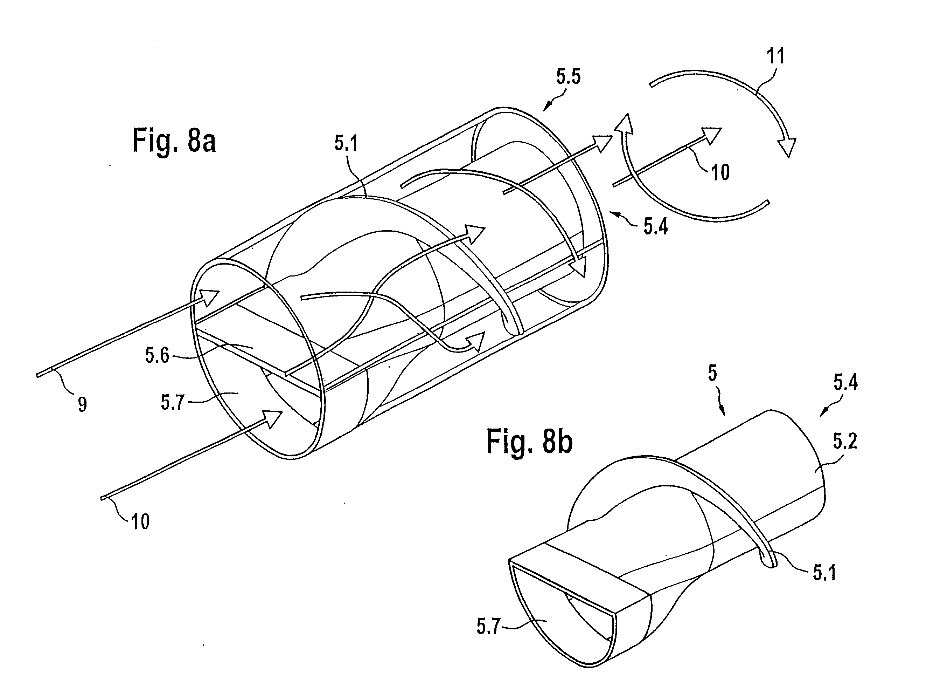

Fig. 8 zeigt die in Fig. 3 dargestellte Luftleitvorrichtung 5 im Detail. Wie bereits ausgeführt, erfolgen die Dosierung und die Aufteilung des Luftstroms 8 schon im Klimagerät 21. Wie aus Fig. 8a werden über entsprechende Luftkanäle der Luftleitvorrichtung 5 der erste Teilluftstrom 10 und der zweite Teilluftstrom 9 zugeführt. Die erste Teilluftstrom 10 tritt in einen unteren Bereich 5.7 in die Luftleitvorrichtung 5 ein und verlässt als Kernluftstrom in einem Kernkanal 5.4 die Ausströmöffnung 2.1. Der zweite Teilluftstrom 9 tritt in einem oberen Bereich 5.6 in die Luftleitvorrichtung 5, wird durch ein Luftleitelement 5.1 mit einem Drall beaufschlagt und verlässt als Mantelluftstrom 11 in einem Mantelkanal 5.5 die Ausströmöffnung 2.1. Der zweite Teilluftstrom 9 wird durch die Luftleitelemente 5.1 wendelförmig um den mittleren Kernkanal 5.4 geführt und erhält entsprechend der Ausrichtung der Luftleitelemente 5.1 einen Drall, im oder entgegen dem Uhrzeigersinn, wie in den Figuren durch entsprechende Pfeile im Bereich des Luftaustritts angedeutet ist. Im Gegensatz zum dargestellten Beispiel ist es aber auch vorstellbar den Kernluftstrom 10 durch geeignete Luftleitelemente mit einem Drall zu beaufschlagen und zur Ausströmöffnung 2.1 zu führen und den Mantelluftstrom 11 im Wesentlichen ohne Drall zur Ausströmöffnung 2.1 zu führen.

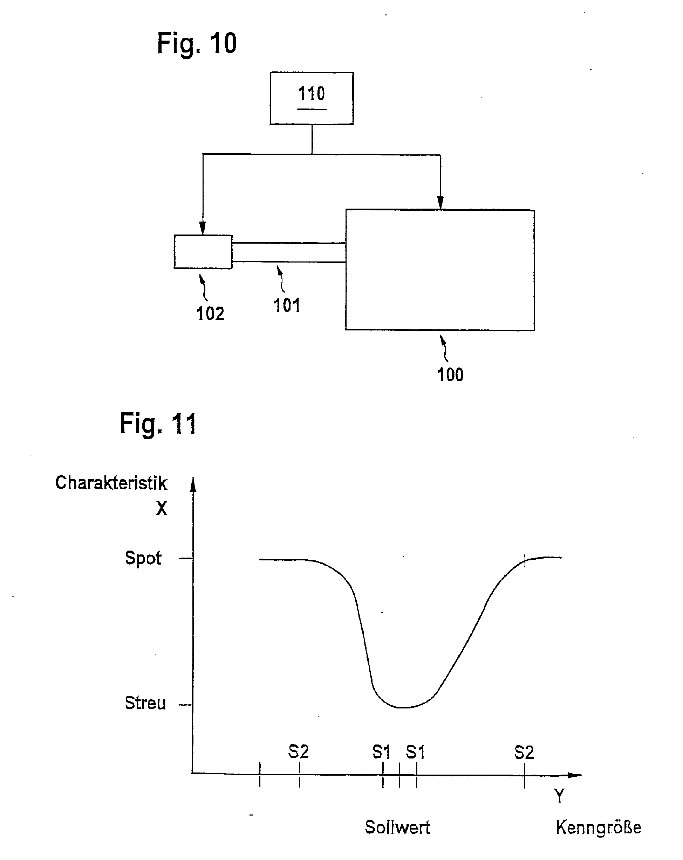

Die Figur 10 zeigt eine schematische Darstellung einer Heizungs-, Belüftungs- und/oder Klimaanlage 100. Diese enthält vorzugsweise Wärmetauscher, wie einen Heizkörper und/oder einen Verdampfer, sowie Luftkanäle und Luftstromsteuerelementen, wie Klappen zur Temperierung und/oder Verteilung der Luft. Von dieser Klimaanlage führt zumindest ein Luftkanal 101 zu einem Ausströmer 102. Die Luft gelangt durch den Ausströmer 102 vorzugsweise in den Innenraum des Fahrzeugs.

Die Steuereinheit 110 steuert dabei sowohl die Klimaanlage 100 als auch den Ausströmer 102. Dabei ist die Charakteristik des Ausströmers steuerbar, so dass entweder die Charakteristik auf Spotcharakteristik oder auf Streucharakteristik einstellbar ist. In einer Zwischeneinstellung kann auch eine Charakteristik einstellbar oder steuerbar sein, die zwischen Spot- und Streucharakterisitk einstellbar ist.

Die Figur 11 zeigt eine erfindungsgemäße Funktion der Charakteristik X eines Ausströmers als Funktion einer Kenngröße Y, beispielsweise einem Parameter P, der eine Temperaturgröße, wie zum Beispiel die Innenraumtemperatur sein kann. Dabei wird die Charakteristik auf Spot eingestellt, solange eine Abweichung des Istwerts von dem Sollwert einen vorgebbaren Wert übersteigt. Bei Unterschreiten des Schwellenwertes S2 wird die Charakteristik von Spot- in Richtung Streucharakteristik verstellt, wobei die Charakteristik die Streucharakteristik bei Annäherung an den Sollwert annimmt, wenn der Istwert im Vergleich zu dem Sollwert einen weiteren Schwellenwert S1 unterschreitet.

Als Kenngröße ist beispielsweise die Innenraumtemperatur T des Fahrzeuginnenraums verwendbar.

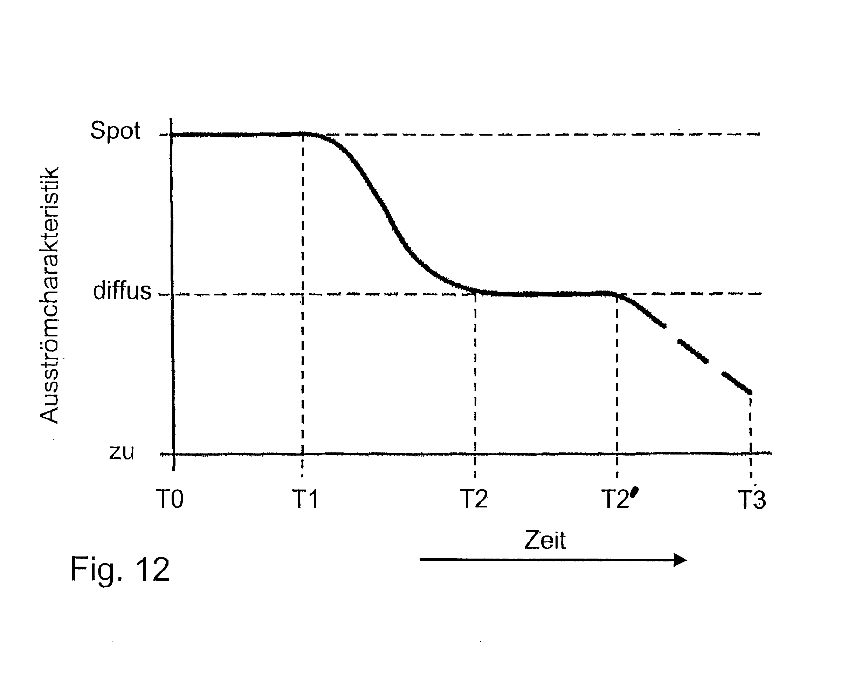

In einem weiteren Ausführungsbeispiel ist in Figur 12 der zeitliche Verlauf der Ausströmcharakteristik eines fahrerseitigen Fußausströmers in Abhängigkeit von einem Parameter P, vorliegend beispielsweise einer Luftausströmtemperatur dargestellt. Insbesondere für niedere Außentemperaturen ist es in der Aufheizphase von Vorteil, wenn die Luftaustritte insbesondere im Fußraum sehr zielgerichtet eingesetzt werden.

Gemäß der in Fig. 12 dargestellten Steuerkennlinie wird die Ansteuerung des Luftausströmers zum Zeitpunkt T0 aktiviert und so eingestellt, dass die Ausströmung maximale Spotwirkung aufweist, beziehungsweise der Streucharakter oder der Diffusanteil minimiert wird. Initialisiert wird die Ansteuerung des Ausströmers beispielsweise durch das Einschalten der Heizungs-, Belüftungs- oder Klimaanlage oder durch die Inbetriebnahme des Fahrzeugs. Die Luftaustrittstemperatur des Ausströmers sollte dabei einen Minimalwert nicht unterschreiten (bei nicht ausreichender Luftaustrittstemperatur wird in einer automatischen Klimaregelung typischerweise der Ausströmer auch geschlossen). Für die Steuerung erfolgt somit die Festlegung des Initialisierungszeitpunkts T0.

In der Aufheizphase wird der Warmluftstrom durch die Spoteinstellung des oder der Fußausströmer direkt auf die Füße des Fahrers oder Beifahrers gelenkt um in diesem Bereich schnellstmöglich ein angenehmes Wärmeempfinden zu erzeugen. Vorteilhafterweise steht zum Zeitpunkt T0 zumindest eine ausreichende Heizleistung zur Verfügung, um eine zielgerichtete punktuelle Aufheizung zu ermöglichen. Eine Aufheizung einer gesamten Innenraumzone, beispielsweise des gesamten Fußraums, kann zum Zeitpunkt T0 aufgrund der zu geringen Heizleistung oft noch nicht erfolgen.

Die zu Beginn eingestellte Spotcharakteristik wird bis zu einem Zeitpunkt T1 konstant gehalten. Die Festlegung des Zeitpunkts T1 erfolgt vorteilhafterweise über den Parameter P1 der Luftaustrittstemperatur am Ausströmer, beziehungsweise der Temperatur, der in den Fußraum tretenden Luft. Das bedeutet, dass bei Erreichen einer bestimmten Ausströmtemperatur zum Zeitpunkt T1, die Ausströmcharakteristik automatisch verändert wird.

Gemäß der Darstellung in Fig. 12 wird die Ausströmcharakteristik des Ausströmers ab dem Zeitpunkt T1 von einer gerichteten oder Spotausströmung zu einer zunehmend diffusen Ausströmung hin verändert. Dies kann kontinuierlich oder in diskreten Verstellschritten am Ausströmer erfolgen. Die Änderung der Ausströmcharakteristik erfolgt im vorliegenden Beispiel bis zu einem Zeitpunkt T2, der über den Parameter P2, der Temperatur, der aus dem Ausströmer austretenden Luft festgelegt wird. Vorliegend wird in weiterer Folge die Ausströmcharakteristik beibehalten und ab dem Zeitpunkt T2' nach dem Erreichen einer bestimmten Luftaustrittstemperatur (Parameter P2') oder einer Innenlufttemperatur, die ausströmende Luftmenge am Ausströmer, beispielsweise-durch sukzessives Verschließen des Luftaustritts bis zu einem Zeitpunkt T3 reduziert, wobei der Zeitpunkt T3 wiederum durch das Erreichen einer bestimmten Luftaustrittstemperatur (Parameterwert P3) oder einer Innenlufttemperatur vorgegeben ist.

Im Rahmen des dargestellten Verfahrens kann die Luftmenge aber auch über den gesamten Verlauf variiert werden. So ist es vorteilhaft, zu Beginn, für die Zeitspanne zwischen T0 und T1 die Ausströmung mit großer Intensität beziehungsweise Ausblasstärke zu betreiben. Dies kann durch geringe oder keine Drosselung am Ausströmer erreicht werden. Im Laufe des Verfahrens, kann die Ausblasstärke dann verringert werden.

Eine Vorrichtung zur Änderung der Ausströmcharakteristik eines Luftausströmers lässt sich in das Klimagerät integrieren. Dies ist insbesondere für die beschriebene Variante eines Fußausströmers im Frontbereich auf Grund seiner räumlichen Nähe zum Klimagerät realisierbar, so dass, insbesondere bei Integration des Ausströmers in das Klimagerät Fußraumkanäle oder zumindest Teile davon entfallen können. Ebenso kann durch die am Ausströmer vorgesehene Luftaustrittsdrossel- oder Absperrvorrichtung eine entsprechende weitere, üblicherweise im Klimagerät vorgesehene Steuer- oder Absperrklappe für die Fußraumluftaustritte entfallen.

Das beschriebene Verfahren mit Änderungen der Ausströmcharakteristik einer Luftdüse in der Aufheizphase zu den Zeitpunkten T0, T1, T2, T3 läuft erfindungsgemäß automatisch ab entsprechend den zugrunde gelegten Regelungskriterien. Ein rein zeitlich gesteuerter Ablauf stellt eher die Ausnahme dar, ist aber ebenso realisierbar.

Das Verfahren kann selbstverständlich in analoger Weise auch für die Abkühlphase, beispielsweise bei Inbetriebnahme eines Fahrzeugs nach längerem Stillstand bei sehr warmen oder heißen Witterungsbedingungen und/oder starker Sonneneinstrahlung eingesetzt werden.

Das, am Beispiel eines Fußausströmers dargelegte Verfahren, eignet sich auch für alle anderen genannten Ausströmer. Insbesondere ist es bei kalten und/oder feuchten Witterungsbedingungen für die Belüftung der Frontscheibe vorteilhaft einsetzbar. Durch die gerichtete Spotausströmung im Aufheizbereich bzw. innerhalb der Zeitspanne T0 bis T1 kann so schnellstmöglich zumindest ein Bereich der Scheibe von eventuellem Beschlag oder Eis befreit werden, wobei durch das anschließende Umstellen auf eine diffuse Ausströmung, ein als unangenehm empfundenes Überheizen im Kopfraumbereich, weitgehend vermieden wird.

## Patentansprüche

1. Verfahren zur Steuerung einer Heizungs-, Belüftungs- oder Klimaanlage (100) mit einem Gehäuse, in welchem zumindest ein Wärmetauscher, wie Heizkörper und/oder Verdampfer aufgenommen ist, durch welche die Luft temperiert wird, mit einem Gebläse, mit zumindest einem Luftkanal (101) mittels welchem temperierte Luft einem Luftausströmer (1, 102) zugeführt wird, mit zumindest einem Luftausströmer (1, 102) aus welchem Luft in einen Innenraum eines Fahrzeuges ausströmt, zumindest einem Sensor zur Erfassung zumindest eines Istwerts und einer Steueranlage (110) zur Ermittlung des Istwerts, **dadurch gekennzeichnet, dass** ein zugeführter Luftstrom in zumindest einen ersten Teilluftstrom (10) und einen zweiten Teilluftstrom (9) aufgeteilt wird, und der erste Teilluftstrom als Kemluftstrom ohne Drall zu einer Austrittsöffnung (2.1) des Luftausströmers und der zweite Teilluftstrom als mit einem Drall beaufschlagter Mantelluftstrom (11) zur Austrittsöffnung (2.1) des Luftausströmers geführt wird, und der Istwert mit zumindest einem Sollwert verglichen wird und mittels eines Stellglieds in Abhängigkeit der Abweichung des Istwerts vom Sollwert die Einstellung der Ausströmcharakteristik des Luftausströmers zwischen einer ersten Charakteristik mit Streucharakter durch den mit Drall beaufschlagten Mantelluftstrom und einer zweiten Charakteristik mit einem Spotcharakter durch den Kernluftstrom ohne Drall verstellt wird.

2. Verfahren zur Steuerung einer Heizungs-, Belüftungs- oder Klimaanlage (100), insbesondere nach Anspruch 1, mit einem Gehäuse, in welchem zumindest ein Wärmetauscher, wie Heizkörper und/oder Verdampfer aufgenommen ist, durch welche die Luft temperiert wird, mit einem Gebläse, mit zumindest einem Luftkanal (101) mittels welchem temperierte Luft einem Luftausströmer (1, 102) zugeführt wird, mit zumindest einem Luftausströmer (1, 102) aus welchem Luft in einen Innenraum eines Fahrzeuges ausströmt, **dadurch gekennzeichnet, dass** ein zugeführter Luftstrom in zumindest einen ersten Teilluftstrom (10) und einen zweiten Teilluftstrom (9) aufgeteilt wird und der erste Teilluftstrom als Kemluftstrom ohne Drall zu einer Austrittsöffnung (2.1) des Luftausströmers und der zweite Teilluftstrom als mit einem Drall beaufschlagter Mantelluftstrom (11) zur Austrittsöffnung (2.1) des Luftausströmers geführt wird und die Ausströmcharakteristik des Luftausströmers zwischen einer ersten Charakteristik mit Streucharakter durch den mit Drall beaufschlagten Mantelluftstrom und einer zweiten Charakteristik mit einem Spotcharakter durch den Kernluftstrom ohne Drall in Abhängigkeit zumindest eines Parameters P gesteuert oder geregelt werden.

3. Verfahren nach Anspruch 2, **dadurch gekennzeichnet, dass** die Ausströmcharakteristik des zumindest einen Luftausströmers nach einem zeitlich vorbestimmten Ablauf verändert wird.

4. Verfahren nach einem der Ansprüche 2 bis 3, **dadurch gekennzeichnet, dass** die Ausströmcharakteristik und/oder die Ausströmstärke des Ausströmers in Abhängigkeit des zumindest einen Parameters P ausgehend von dessen Ausgangswert P0 bis zum Erreichen eines Parameterwertes P1 konstant auf einer ersten Ausströmcharakteristik und/oder ersten Ausströmstärke gehalten wird und nach Erreichen des Parameterwertes P1 kontinuierlich oder in diskreter Schrittfolge automatisch bis zu einer zweiten Ausströmcharakteristik und/oder Ausströmstärke bis zum Erreichen eines Parameterwertes P2 verändert wird.

5. Verfahren nach einem der Ansprüche 2 bis 4, **dadurch gekennzeichnet, dass** die Ausströmstärke des Ausströmers nach Erreichen des Parameterwertes P2 kontinuierlich oder in diskreter Schrittfolge automatisch bis zu einer dritten Ausströmstärke bis zum Erreichen des Parameterwertes P3 verändert, insbesondere bis zu einem vorbestimmten Wert reduziert wird, wobei die Ausströmcharakteristik konstant gehalten wird.

6. Verfahren nach einem der Ansprüche 2 bis 5, **dadurch gekennzeichnet, dass** der zumindest eine Parameter P ein Temperatur- und/oder ein Zeitparameter ist.

7. Verfahren nach Anspruch 6, **dadurch gekennzeichnet, dass** der Temperaturparameter die Innenraumluft-, Außenluft- und/oder Luftaustrittstemperatur ist.

8. Verfahren nach einem der Ansprüche 1 bis 7, **dadurch gekennzeichnet, dass** ein Zeitpunkt T0 für den Beginn des Ablaufs des Verfahrens durch das Einschalten der Heizungs-, Belüftungs- oder Klimaanlage, oder durch die Inbetriebnahme des Kraftfahrzeugs festgelegt wird.

9. Verfahren nach einem der Ansprüche 5 bis 8, **dadurch gekennzeichnet, dass** die Parameterwerte P1, P2 und/oder P3 in Abhängigkeit eines Kennfeldes festgelegt werden.

## Claims

1. A method for controlling a heating, ventilating, or air-conditioning system (100) having a housing in which at least one heat exchanger such as a heating element and/or vaporizer is accommodated, for the purpose of conditioning the air, having a blower with at least one air duct (101) for feeding conditioned air to an air outflow vent (1, 102), having at least one air outflow vent (1, 102) from which air streams out into a passenger compartment of a vehicle, at least one sensor for sensing at least one actual value and an open-loop control system (110) for determining the actual value, **characterized in that** a supplied air stream is divided into at least one first partial air stream (10) and one second partial air stream (9), and the first partial air stream is fed as the inner air stream without swirl to an outlet opening (2.1) of the air outflow vent, and the second partial air stream is fed as an outer air stream (11) with swirl to the outlet opening (2.1) of the air outflow vent, and the actual value is compared with at least one setpoint value and, as a function of the deviation of the actual value from the setpoint value, the setting of the outflow characteristic of the air outflow vent is adjusted using an actuator element between a first characteristic with a scatter character by the outer air stream with swirl and a second characteristic with a spot character by the inner air stream without swirl.

2. The method for controlling a heating, ventilating, or air-conditioning system (100), in particular as claimed in claim 1, having a housing in which at least one heat exchanger such as a heating element and/or vaporizer is accommodated, for the purpose of conditioning the air, having a blower with at least one air duct (101) for feeding conditioned air to an air outflow vent (1, 102), having at least one air outflow vent (1, 102) from which air streams out into a passenger compartment of a vehicle, **characterized in that** a supplied air stream is divided into at least one first partial air stream (10) and one second partial air stream (9), and the first partial air stream is fed as the inner air stream without swirl to an outlet opening (2.1) of the air outflow vent, and the second partial air stream is fed as an outer air stream (11) with swirl to the outlet opening (2.1) of the air outflow vent, and the outflow characteristic of the air outflow vent is open-loop controlled or closed-loop controlled as a function of at least one parameter P between a first characteristic with a scatter character by the outer air stream with swirl and a second characteristic with a spot character by the inner air stream without swirl.

3. The method as claimed in claim 2, **characterized in that** the outflow characteristic of the at least one air outflow vent is changed according to a chronologically predetermined profile.

4. The method as claimed in one of claims 2 to 3, **characterized in that** the outflow characteristic and/or the outflow setting of the outflow vent is kept constant at a first outflow characteristic and/or first outflow setting as a function of the at least one parameter P starting from its initial value P0 until a parameter value P1 is reached, and after the parameter value P1 is reached it is changed automatically in a continuous fashion or in discrete increments up to a second outflow characteristic and/or outflow setting until a parameter value P2 is reached.

5. The method as claimed in one of claims 2 to 4, **characterized in that**, after the parameter value P2 is reached, the outflow setting of the outflow vent is changed automatically in a continuous fashion or in discrete increments up to a third outflow setting until the parameter value P3 is reached, in particular is reduced to a predetermined value, the outflow characteristic being kept constant.

6. The method as claimed in one of claims 2 to 5, **characterized in that** the at least one parameter P is a temperature parameter and/or a time parameter.

7. The method as claimed in claim 6, **characterized in that** the temperature parameter is the passenger compartment air temperature, external air temperature and/or air outlet temperature.

8. The method as claimed in one of claims 1 to 7, **characterized in that** a time T0 for the start of the sequence of the method is defined by switching on the heating, ventilating or air-conditioning system or by activating the motor vehicle.

9. The method as claimed in one of claims 5 to 8, **characterized in that** the parameter values P1, P2 and/or P3 are defined as a function of a characteristic diagram.

## Revendications

1. Procédé de commande d'un système (100) de chauffage, de ventilation ou de climatisation comprenant un carter dans lequel est logé au moins un échangeur de chaleur tel qu'un radiateur et / ou un évaporateur, à travers lesquels l'air est tempéré, comprenant une soufflante, comprenant au moins un conduit d'air (101) au moyen duquel de l'air tempéré est fourni à un diffuseur d'air (1, 102), comprenant au moins un diffuseur d'air (1, 102) par lequel de l'air s'écoule dans l'habitacle d'un véhicule, au moins un capteur servant à la détection d'au moins une valeur réelle, et comprenant un système de commande (110) servant à la détermination de la valeur réelle,
**caractérisé en ce qu'**un flux d'air fourni est partagé en au moins un premier flux d'air partiel (10) et un deuxième flux d'air partiel (9), et le premier flux d'air partiel est guidé comme flux d'air central sans tourbillon, vers une ouverture de sortie (2.1) du diffuseur d'air, le deuxième flux d'air partiel étant guidé comme flux d'air latéral (11) sollicité par un tourbillon, vers l'ouverture de sortie (2.1) du diffuseur d'air, et la valeur réelle est comparée à au moins une valeur de consigne et, en fonction de l'écart de la valeur réelle par rapport à la valeur de consigne, le réglage de la caractéristique d'écoulement du diffuseur d'air entre une première caractéristique ayant un caractère de diffusion à travers le flux d'air latéral sollicité par un tourbillon, et une deuxième caractéristique ayant un caractère de jet dirigé à travers le flux d'air central sans tourbillon, est réalisé au moyen d'un actionneur.

2. Procédé de commande d'un système (100) de chauffage, de ventilation ou de climatisation, en particulier selon la revendication 1, comprenant un carter dans lequel est logé au moins un échangeur de chaleur tel qu'un radiateur et / ou un évaporateur, à travers lesquels l'air est tempéré, comprenant une soufflante, comprenant au moins un conduit d'air (101) au moyen duquel de l'air tempéré est fourni à un diffuseur d'air (1, 102), comprenant au moins un diffuseur d'air (1, 102) par lequel de l'air s'écoule dans l'habitacle d'un véhicule,
**caractérisé en ce qu'**un flux d'air fourni est partagé en au moins un premier flux d'air partiel (10) et un deuxième flux d'air partiel (9), et le premier flux d'air partiel est guidé comme flux d'air central sans tourbillon, vers une ouverture de sortie (2.1) du diffuseur d'air, le deuxième flux d'air partiel étant guidé comme flux d'air latéral (11) sollicité par un tourbillon, vers une ouverture de sortie (2.1) du diffuseur d'air, et la caractéristique d'écoulement du diffuseur d'air entre une première caractéristique ayant un caractère de diffusion à travers le flux d'air latéral sollicité par un tourbillon, et une deuxième caractéristique ayant un caractère de jet dirigé à travers le flux d'air central sans tourbillon, est commandée ou réglée en fonction d'au moins un paramètre P.

3. Procédé selon la revendication 2, **caractérisé en ce que** la caractéristique d'écoulement du diffuseur d'air au moins au nombre de un est modifiée après un déroulement prédéterminé dans le temps.

4. Procédé selon l'une des revendications 2 ou 3, **caractérisé en ce que** la caractéristique d'écoulement et / ou la force d'écoulement du diffuseur est maintenue constante à une première caractéristique d'écoulement et / ou à une première force d'écoulement, en fonction du paramètre P au moins au nombre de un, à partir de sa valeur initiale P0 jusqu'à l'obtention d'une valeur de paramètre P1, et, après obtention de la valeur de paramètre P1, est, de façon continue ou suivant un ordre graduel discret, modifiée automatiquement jusqu'à une deuxième caractéristique d'écoulement et / ou force d'écoulement, jusqu'à l'obtention d'une valeur de paramètre P2.

5. Procédé selon l'une quelconque des revendications 2 à 4, **caractérisé en ce que** la force d'écoulement du diffuseur, après obtention de la valeur de paramètre P2, est, de façon continue ou suivant un ordre graduel discret, modifiée automatiquement jusqu'à une troisième force d'écoulement, jusqu'à à l'obtention de la valeur de paramètre P3, en particulier est réduite jusqu'à une valeur prédéterminée, où la caractéristique d'écoulement est maintenue constante.

6. Procédé selon l'une quelconque des revendications 2 à 5, **caractérisé en ce que** le paramètre P au moins au nombre de un est un paramètre de température et / ou de temps.

7. Procédé selon la revendication 6, **caractérisé en ce que** le paramètre de température est la température de l'air de l'habitacle, de l'air extérieur et / ou de la sortie d'air.

8. Procédé selon l'une quelconque des revendications 1 à 7, **caractérisé en ce qu'**un instant T0 est fixé pour le début du déroulement du procédé, par la mise en marche du système de chauffage, de ventilation ou de climatisation, ou bien par la mise en route du véhicule automobile.

9. Procédé selon l'une quelconque des revendications 5 à 8, **caractérisé en ce que** les valeurs de paramètres P1, P2 et / ou P3 sont déterminées en fonction d'un diagramme caractéristique.
